# EUROPÄISCHE PATENTSCHRIFT

(11) **EP 1 024 321 B1**
(45) Veröffentlichungstag und Bekanntmachung des Hinweises auf die Patenterteilung: **14.03.2007**
(21) Anmeldenummer: 00101312.7
(22) Anmeldetag: 22.01.2000
(51) Int. Cl.: F16L 17/025, F16L 25/00, F16L 11/15, F16L 21/03, F16L 9/06, F16L 11/18, F16L 37/084

(54) **Rohr mit abwechselnd angeordneten glatten Rohrabschnitten und Wellrohrabschnitten**
Pipe with alternately arranged smooth and corrugated pipe sections
Tuyau avec sections lisses et ondulées disposées en alternance

(30) Priorität: 29.01.1999 DE 29901529 U
(43) Veröffentlichungstag der Anmeldung: 02.08.2000
(73) Patentinhaber: Bächle, Dieter, 8597 Landschlacht (CH)
(72) Erfinder: Fontanive Bächle, Loredana, 8597 Landschlacht (CH)
(74) Vertreter: Hiebsch, Gerhard F.

(56) Entgegenhaltungen:
- EP-A- 0 667 481
- EP-A- 1 006 305
- DE-A- 2 824 395
- DE-A- 3 322 202
- DE-C- 865 081
- DE-U- 29 813 662
- US-A- 3 847 184
- US-A- 4 852 616
- US-A- 5 366 262

## Beschreibung

Die Erfindung betrifft ein Rohr mit abwechselnd angeordneten glatten Rohrabschnitten und Wellrohrabschnitten nach dem Oberbegriff des Patentanspruchs 1.

Ein derartiges Rohr ist in der DE 195 31 245 A1 beschrieben. Es besteht aus einem die glatten Rohrabschnitte und die Wellrohrabschnitte enthaltenden Mittelteil, an welchen einends ein Steckrohrabschnitt sowie am anderen Ende ein Muffenteil angeformt sind. Dazu wird ausgeführt, dass zur Längenanpassung einer Rohrleitung dieses Rohr an einem seiner glatten Rohrabschnitte abgeschnitten und dieser als Einsteckteil ausgebildet wird. Dadurch soll ein Wellrohr angepasster Länge mit einem Muffenteil und einem Einsteckteil entstehen, dessen Einfügung in die Rohrleitung problemlos möglich sein soll.

Der US-A-3 847 184 ist ein Metallrohr für Fluide mit mehreren Wellrohrabschnitten als Knickbereichen zu entnehmen, die es ermöglichen, das Rohr in eine nicht lineare Konfiguration zu überführen. Diese Knickbereiche weisen den Innendurchmesser der glatten Rohrabschnitte auf, sind aber von größerer axialer Länge als die glatten Rohrabschnitte. Einer der beiden endwärtigen glatten Rohrabschnitte ist als Muffe erweiterten Durchmessers gestaltet, in den der glatte Endbereich eines entsprechend gestalteten weiteren Metallrohres gleicher Gestaltung eingeschoben zu werden vermag.

Ein dichtendes Rohrverbindungsstecksystem für flüssige oder gasförmige Medien nach DE 33 22 202 A1 schafft eine steckbare, feste, dichte, kraftschlüssige und im Bedarfsfall lösende Rohrverbindung, die Energie, Hilfsmittel und Montagezeit spart. Das zu verbindende Rohrende wird bis zum Anschlag in ein mit Dichtung und Sicherung ausgestattetes An-schlussteil gedrückt; die Sicherung weitet sich durch Schrägstellen und hält mit ihrem als Keil ausgebildeten Innendurchmesser das Rohr derart, dass sich bei axialer Zugbelastung die im Rohr einkrallende Sicherung zwischen dem Nutdurchmesser des Anschlussteils und dem Rohr verkeilt. Das Lösen der Verbindung wird durch Weiten der Sicherung mit Spezialwerkzeug erreicht.

Die EP 1 006 305 A1 zeigt eine Rohrmuffe, in der ein querschnittlich mehrkantiger Dichtring lagert, der sich einerseits gegen einen in die Rohrmuffe eingelegten Tragring abstützt sowie anderseits von einem endwärts eingeschobenen Haltering festgelegt wird.

In Kenntnis dieses Standes der Technik hat sich der Erfinder das Ziel gesetzt, Handwerkern insbesondere für die Herstellung von Abgasleitungen und Kaminen ein Halbzeug anhand zu geben, welches auf einfache Weise gehandhabt und eingebaut zu werden vermag, ohne dass wesentliche Rohrabschnitte zu Abfall werden.

Zur Lösung dieser Aufgabe führt die Lehre des unabhängigen Anspruches; die Unteransprüche geben günstige Weiterbildungen an.

Erfindungsgemäß ist das Rohr als aufrollbarer Rohrstrang ausgestaltet und bildet mit zumindest einem Muffenrohr einen Bausatz; der Rohrstrang besteht aus abwechselnden glatten Rohrabschnitten und flexiblen Wellrohrabschnitten etwa gleicher Länge, wobei der Außendurchmesser der glatten Rohrabschnitte mit Spiel dem Innendurchmesser der Muffe des einem vom Rohrstrang abgelängten Rohrelements -- als Teil des Bausatzes -- zugeordneten Muffenrohres entspricht. Die Muffe nimmt ein an einen Wellrohrabschnitt anschließende Einsteckende auf unter Zwischenschaltung wenigstens eines Dichtringes, der in einer rinnenartigen Ringausformung der Muffe untergebracht ist. Hier handelt es sich also um einen Einbausatz aus dem Rohrstrang einerseits und den zugeordneten Muffenrohren, in deren Muffe jeweils ein zugerichteter glatter Rohrabschnitt des Rohrstranges eingesetzt werden kann. Da nach einem weiteren Merkmal der Erfindung der freie Innenquerschnitt jenes Dichtungsringes enger ist als der Außenquerschnitt des glatten Rohrabschnittes, sitzt dieser nach dem Zusammenbau beider Teile abgedichtet in der Muffe.

Um die Flexibilität des Rohrstranges zu erhöhen, soll sich der Längsschnitt der Wandung des glatten Rohrabschnittes im Bereich des Überganges in den Wellrohrabschnitten zu diesem hin verjüngen. Dabei hat es sich als günstig erwiesen, die Wellen des Wellenrohrabschnittes von der Wandung des glatten Rohrabschnittes in einem Kragmaß abkragen zu lassen, welches etwa der fünffachen Wanddicke entspricht, d. h. die Wellen befinden sich außerhalb des bereits erwähnten Innendurchmessers des Rohrstranges, der insgesamt für den Durchzug der Abgase od. dgl. Strömungsmedien frei bleibt.

Zur Verbesserung des Sitzes der beiden Rohrelemente ineinander ist es vorteilhaft, in die Ringausformung zusätzlich zum Dichtungsring einen Federring einzubringen, wobei Dichtungsring und Federring zusammen querschnittlich dem Querschnitt der Ringausformung in axialer und radialer Richtung angepasst sind, was zu einem festen Sitz beider Einzelteile im Muffenrohr führt.

Vom Dichtungsring ragen an seiner Innenseite mehrere Dichtlippen ab, welche sich nach Einschub des glatten Rohrabschnittes des Rohrstranges in Einschubrichtung krümmen und sich an den Einschubteil anschmiegen. Auch dies verbessert die Dichtwirkung des Dichtungsringes.

Im übrigen ist der Federring flach aus einem Metallstreifen gebogen, wobei die Streifenenden in Abtand zueinander verbleiben, so dass der Durchmesser des Federringes begrenzt verändert zu werden vermag.

Von der Innenkante des Federringes ausgehend, sind in dessen Fläche Randeinformungen eingebracht, welche den Federring in einen äußeren geschlossenen Ringteil und einen inneren geschlitzten Ringteil unterteilen. Dank dieser Maßgabe schmiegt sich auch der innere Ringteil des Federringes beim Einschieben eines Rohres in das Muffenrohr dem Einschubteil an.

Insgesamt ergibt sich insbesondere für die Verwendung als Abgasrohr ein günstiges System, um mit dem erfindungsgemäßen Rohrstrang einerseits und dem ihm zugeordneten Muffenrohr anderseits auf einfache Weise Anpassungen vorzunehmen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigen in:
- Fig. 1:: eine Seitenansicht eines Rohres mit wechselnd glatten zylindrischen Abschnitten einerseits und in sich gewellten Abschnitten andererseits;
- Fig. 2:: die vergrößerte Seitenansicht eines aus dem Rohr der Fig. 1 abgelängten Rohrelementes;
- Fig. 3:: eine Schrägsicht auf das Rohrelement der Fig. 2;
- Fig. 4:: ein vergrößertes Detail aus Fig. 2 nach deren Pfeil IV;
- Fig. 5:: eine Schrägsicht auf eine Rohrpaarung aus dem Rohrelement der Fig. 2,3 und einem zugeordneten Muffenrohr;
- Fig. 6:: die Rohrkombination der Fig. 5 mit geschnittenem Muffenrohr und darin erkennbarem Dichtring;
- Fig. 7:: ein vergrößertes Detail aus Fig. 6 nach deren Pfeil VII;
- Fig. 8:: eine Schrägsicht auf einen Dichtungsring;
- Fig.9:: den Diametralschnitt durch Fig. 8;
- Fig. 10:: ein vergrößertes Detail der Fig. 9 nach deren Pfeil X;
- Fig. 11:: den Bereich der Fig. 7 nach Einschub eines weiteren Rohres;
- Fig. 12:: ein Rohrelement mit zugeordneten Zusatzelementen.

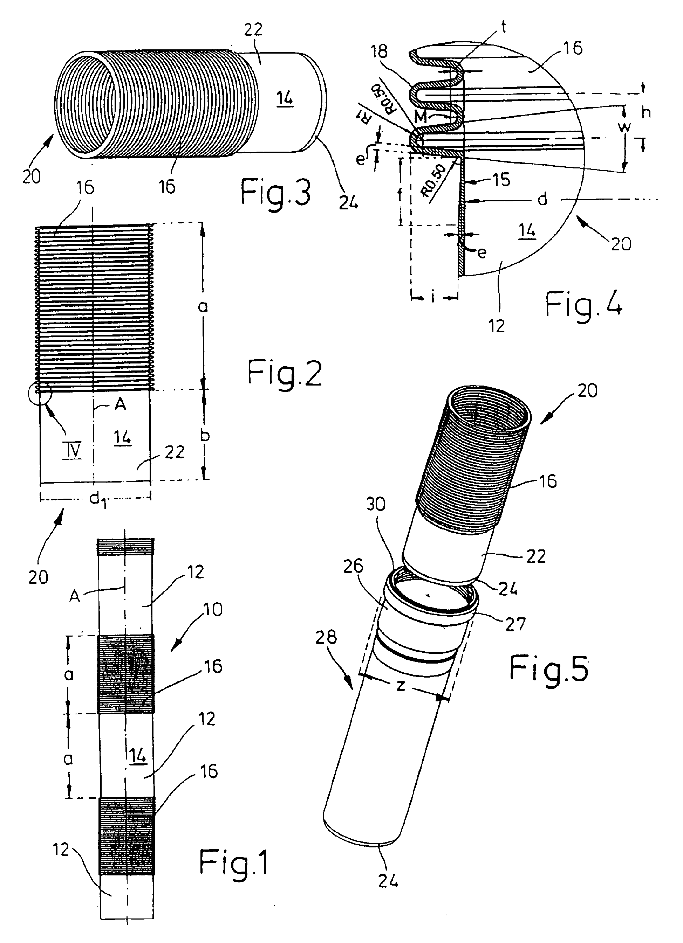

In Fig. 1 ist ein Abschnitt eines Rohres 10 wiedergegeben, das bevorzugt in 50 m- oder 100 m-Rollen ausgeliefert wird und wechselnd zylindrische Abschnitte 12 mit glatter Wandung 14 sowie längsschnittlich gewellte flexible Abschnitte 16 mit ringförmigen Wellen 18 aufweist. Die axiale Länge a der Abschnitte 12, 16 ist etwa gleich und misst etwa 80 bis 150 mm.

Von diesem Rohr 10 konstanten Innendurchmessers d von hier 79 mm werden -- als Bauteil in Anpassung an den Gebrauch als Abgasrohr an Gebäuden -- einzelne Rohrelemente 20 abgelängt, die gemäß Fig. 2, 3 aus dem flexiblen Abschnitt 16 einer Länge a von hier 130 mm mit einem aus dem zylindrischen Abschnitt 12 gefertigten Steckstutzen 22 der Länge b von 70 mm und des Außendurchmessers d₁ von 80 mm seiner glatten Wandung 14 einer Dicke e von 0,5 mm bestehen. Der Rand 24 des Steckstutzens oder Einsteckendes 22 ist an dessen Außenfläche angefast.

Wie vor allem Fig. 4 verdeutlicht, vermindert sich die Wanddicke e des Einsteckendes 22 zum Wellrohrabschnitt 16 hin in einem Bereich axialer Länge f von etwa 5 mm stetig auf die Hälfte ihres Maßes am Wellenbeginn, wobei der Mittenabstand h zwischen den Wellen 18 des Wellrohrabschnittes 16 etwa 3,5 mm sowie ihre radiale Kraglänge i etwa 3 mm messen. Diese Wellen 18 erweitern sich querschnittlich von ihrem Krümmungszenit jeweils in einem Winkel w von 12°. Der Abstand t der inneren Krümmungsmittelpunkte M von der Flucht der Innenfläche 15 der glatten Wandung 14 entspricht der doppelten Wanddicke e.

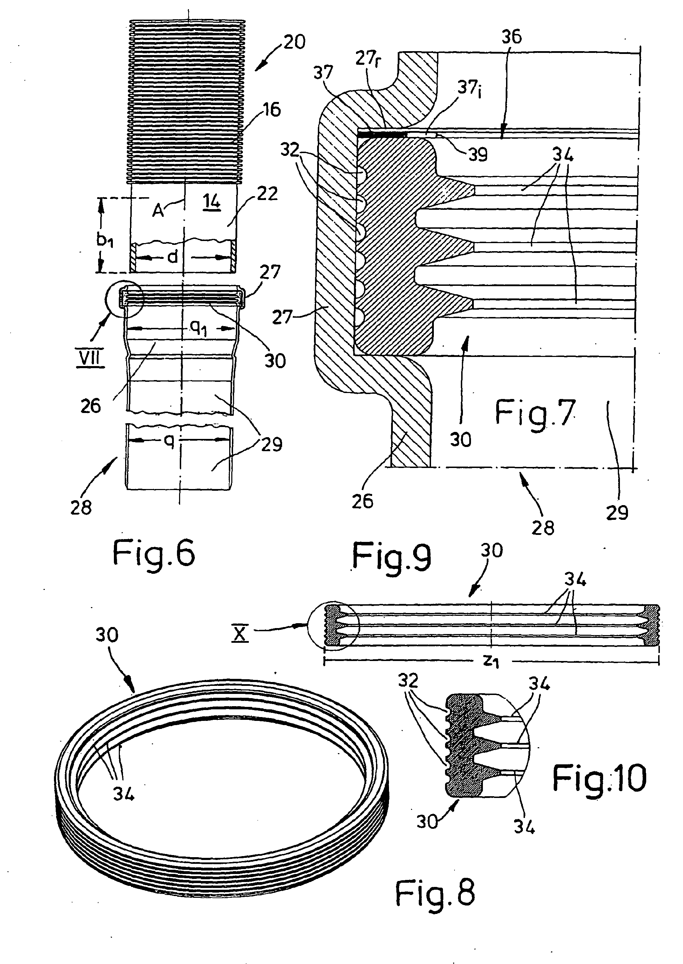

In Fig. 5 ist der Längsachse A des Einsteckendes 22 eine Muffe 26 eines Muffenrohres 28 des Innendurchmessers q von 76 mm zugeordnet; in der Muffe 26 - deren Innendurchmesser q₁ 82 mm beträgt -- ist ein Dichtungsring 30 zu erkennen. Die Eintauchtiefe b₁ des Einsteckendes 22 beträgt etwa 60 mm.

Der erwähnte Dichtungsring 30 -- dessen Außendurchmesser z₁ 90 mm misst -- lagert in einer rinnenförmigen Ringanformung 27 der Muffe 26 eines Außendurchmessers z von hier 94 mm. Der Dichtungsring 30 ist außenseitig mit Umfangsrillen 32 und zum Rohrinnenraum 29 hin mit drei Dichtlippen 34 versehen. In Fig. 7 ist ein dem Dichtring 30 aufgelegter flacher Federring 36 zu erkennen. Dieser ist gemäß Fig. 12 aus einem endlichen Stahlstreifen geformt mit in Abstand n zueinander stehenden Streifenenden 38 sowie von der Innenkante 39 ausgehenden Randeinformungen 40 T-förmiger Draufsicht; letztere verleihen dem Federring 36 die gewünschte querschnittliche Flexiblität.

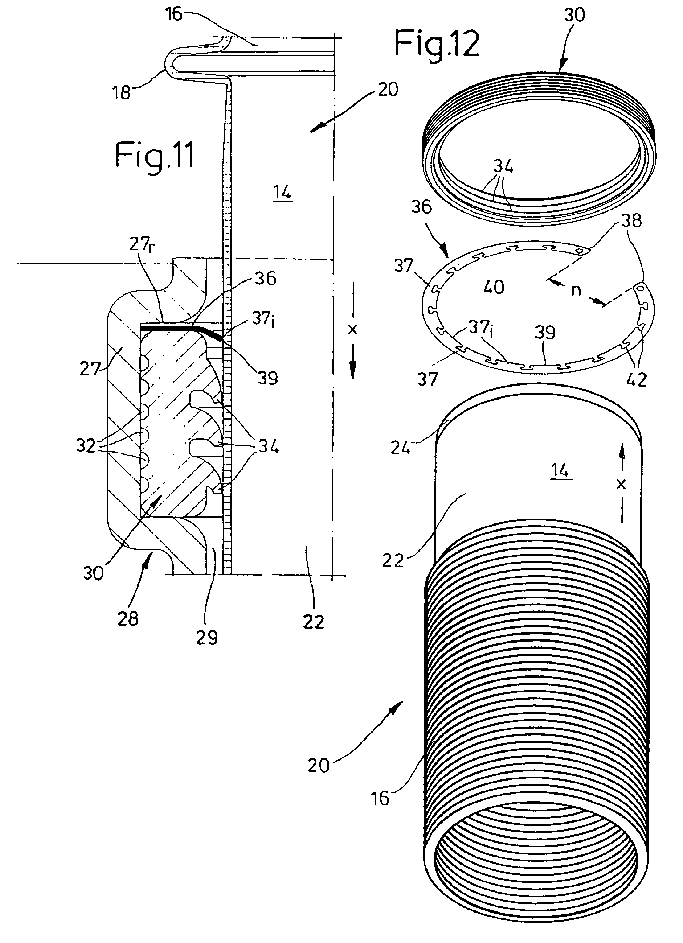

Wie vor allem in Fig. 7, 11 verdeutlicht, liegt der an die hinterschnittenen Teile 42 der T-förmigen Randeinformungen 40 anschließende Außenbereich 37 der Radialwandfläche 27ᵣ der Ausformung 27 an; der die Randeinformung 40 enthaltende Innenbereich 37ᵢ des Federringes 36 wird beim Einschieben des Steckstutzens oder Einsteckendes 22 in Einschubrichtung x in diese begrenzt verformt. Ebenfalls schmiegen sich die Dichtlippen 34 des Dichtungsringes 30 -- endwärts in Einschubrichtung x verformt -- dem Steckstutzen 22 an.

## Patentansprüche

1. Rohr mit abwechselnd angeordneten glatten Rohrabschnitten (12) und Wellrohrabschnitten (16) sowie etwa konstanten Innendurchmessers (d), welch letztere jeweils eine Wandung aus mehreren radial auskragenden ringartigen Wellen aufweisen,
**dadurch gekennzeichnet,**
**dass** das Rohr (10) als aufrollbarer Rohrstrang ausgebildet ist und mit zumindest einem Muffenrohr (28) einen Bausatz bildet, wobei der Rohrstrang aus abwechselnden glatten Rohrabschnitten (12) und flexiblen Wellrohrabschnitten (16) etwa gleicher Länge (a) besteht sowie der Außendurchmesser (d₁) der glatten Rohrabschnitte mit Spiel dem Innendurchmesser (q₁) der Muffe (26) des einem vom Rohrstrang abgelängten Rohrelements (20) zugeordneten Muffenrohres (28) entspricht, dass die Muffe ein an einen Wellrohrabschnitt anschließendes Einsteckende aufnimmt sowie mit wenigstens einer rinnenartigen Ringausformung (27) zur Aufnahme zumindest eines Dichtungsringes (30) versehen ist.

2. Rohr nach Anspruch 1, **dadurch gekennzeichnet, dass** sich der Längsschnitt der Wandung (14) des glatten Rohrabschnittes (12) im Bereich des Überganges in den Wellrohrabschnitt (16) zu diesem hin verjüngt.

3. Rohr nach Anspruch 1 oder 2, **dadurch gekennzeichnet, dass** die Wellen (18) des Wellrohrabschnittes (16) von der Wandung (14) des glatten Rohrabschnittes (12) in einem Kragmaß (i) abkragen, welches etwa der fünffachen Wanddicke (e) entspricht.

4. Rohr nach Anspruch 1, **dadurch gekennzeichnet, dass** in der Ringausformung (27) ein Dichtring (30) sowie ein Federring (36) angeordnet sind, welche zusammen querschnittlich den Querschnitt der Ringausformung ausfüllen.

5. Rohr nach Anspruch 1 oder 4, **dadurch gekennzeichnet, dass** dem Dichtungsring (30) an seiner Innenseite mehrere Dichtlippen (34) angeformt sind, die einen lichten Querschnitt umgeben, der kleiner ist als der vom Außendurchmesser (d₁) des glatten Rohrabschnittes (12) bestimmte Querschnitt.

6. Rohr nach einem der Ansprüche 1 bis 5, **dadurch gekennzeichnet, dass** in die Außenseite des Dichtungsringes (30) Umfangsrillen (32) eingeformt sind.

7. Rohr nach einem der Ansprüche 1 bis 6, **dadurch gekennzeichnet, dass** der Federring (36) flach aus einem Metallstreifen gebogen ist, dessen Streifenenden (38) in Abstand (n) zueinander stehen und von dessen Innenkante (39) Randeinformungen (40) ausgehen.

8. Rohr nach Anspruch 7, **gekennzeichnet durch** in Draufsicht T-förmige Randeinformungen (40), deren hinterschnittener Bereich (42) etwa in Querschnittsmitte des Federringes (36) verlaufen und einen geschlossenen Außenbereich (37) des Federringes (36) sowie einen radial geschlitzten Innenbereich (37ᵢ) des Federringes bestimmen.

## Claims

1. Pipe with alternately arranged smooth pipe sections (12) and corrugated pipe sections (16) and approximately constant internal diameter (d), which latter have in each case a wall comprising several radially projecting annular corrugations, **characterised in that** the pipe (10) is designed as piping which can be rolled up and forms a kit with at least one socket pipe (28), wherein the piping consists of alternately smooth pipe sections (12) and flexible corrugated pipe sections (16) of approximately equal length (a) and the external diameter (d₁) of the smooth pipe sections with clearance corresponds to the internal diameter (q₁) of the socket (26) of the socket pipe (28) assigned to a pipe element (20) cut to length from the piping, **in that** the socket accommodates an insertion end connected to a corrugated pipe section and is provided with at least one channel-like annular recess (27) to accommodate at least one sealing ring (30).

2. Pipe according to claim 1, **characterised in that** the longitudinal section of the wall (14) of the smooth pipe section (12) tapers in the region of the transition to the corrugated pipe section (16) towards the latter.

3. Pipe according to claim 1 or 2, **characterised in that** the corrugations (18) of the corrugated pipe section (16) project from the wall (14) of the smooth pipe section (12) with a protruding dimension (i), which corresponds approximately to five times the wall thickness (e).

4. Pipe according to claim 1, **characterised in that** a sealing ring (30) and a spring ring (36), which together in terms of cross-section fill the cross-section of the annular recess, are arranged in the annular recess (27).

5. Pipe according to claim 1 or 4, **characterised in that** several sealing lips (34) which surround an internal cross-section, which is smaller than the cross-section defined by the external diameter (d₁) of the smooth pipe section (12), are moulded onto the sealing ring (30) on its inner side.

6. Pipe according to one of claims 1 to 5, **characterised in that** peripheral channels (32) are moulded in the outer side of the sealing ring (30).

7. Pipe according to one of claims 1 to 6, **characterised in that** the spring ring (36) is curved evenly from a metal strip, the strip ends (38) of which are at a distance (n) from one another and from the inner edge (39) of which edge mouldings (40) start.

8. Pipe according to claim 7, **characterised by** edge mouldings (40) which are T-shape in plan view, the undercut region (42) of which run approximately in cross-sectional centre of the spring ring (36) and define a closed outer region (37) of the spring ring (36) and a radially slotted inner region (37ᵢ) of the spring ring.

## Revendications

1. Tube avec des sections de tube lisse (12) et des sections de tube ondulé (16) alternées ainsi qu'avec un diamètre intérieur (d) à peu près constant, ces dernières présentant chacune une paroi formée d'une pluralité d'ondes annulaires en saillie radialement, **caractérisé en ce que** le tube (10) est réalisé sous forme de tronçon de tube enroulable et forme avec au moins un tube de manchon (28) un ensemble de constructions, dans lequel le tronçon de tube est composé d'une alternance de sections de tube lisse (12) et de sections de tube ondulé (16) de longueur (a) à peu près identique, ainsi que le diamètre extérieur (d₁) de la section de tube lisse correspond avec un jeu au diamètre intérieur (q₁) du manchon (26) du manchon de tube (28) associé à un élément de tube (20) coupé à partir du tronçon de tube, **en ce que** le manchon reçoit une extrémité d'enfichage se raccordant à une section de tube ondulé et est muni d'au moins une déformation (27) annulaire en forme de goulette devant recevoir au moins une bague d'étanchéité (30).

2. Tube selon la revendication 1, **caractérisé en ce que** la coupe longitudinale de la paroi (14) de la section de tube lisse (12) dans la zone de la transition vers la section de tube ondulé (16) va en s'effilant vers celle-ci.

3. Tube selon la revendication 1 ou 2, **caractérisé en ce que** les ondulations (18) de la section de tube ondulé (16) font saillie de la paroi (14) de la section de tube lisse (12) selon une valeur de saillie (i) correspondant à peu près au quintuple de l'épaisseur de paroi (e).

4. Tube selon la revendication 1, **caractérisé en ce que** dans la déformation annulaire (27) sont disposées une bague d'étanchéité (30) ainsi qu'une bague élastique (36) qui remplissent ensemble la section considérée en section transversale, la section transversale de la déformation annulaire.

5. Tube selon la revendication 1 ou 4, **caractérisé en ce que** sur la bague d'étanchéité (30) sont formées d'un seul tenant sur sa face intérieure plusieurs lèvres d'étanchéité (34) entourant une section transversale libre plus petite que la section transversale déterminée par le diamètre extérieur (d₁) de la section de tube lisse (12).

6. Tube selon l'une des revendications 1 à 5, **caractérisé en ce que** des moulures périphériques (32) sont creusées dans la face extérieure de la bague d'étanchéité (30).

7. Tube selon l'une des revendications 1 à 6, **caractérisé en ce que** la bague élastique (36) est obtenue par pliage à plat à partir d'une bande métallique dont les extrémités de bande (38) sont à distance (n) l'une de l'autre et des creusements de bordure (40) sortent de son bord intérieur (39).

8. Tube selon la revendication 7, **caractérisé en ce que** des creusements de bordure (40) ayant, observé en vue de dessus une forme en T et dont la zone (42) munie d'une contre-dépouille s'étend à peu près au centre de la section transversale de la bague élastique (36) et détermine une zone extérieure (37) fermée de la bague élastique (36) ainsi qu'une zone intérieure (37ᵢ) fendue radialement de la bague élastique.
